(19)

**Europäisches Patentamt**
**European Patent Office**
**Office européen des brevets**

(11)     **EP 1 722 449 B1**

(12)     **EUROPÄISCHE PATENTSCHRIFT**

(45) Veröffentlichungstag und Bekanntmachung des Hinweises auf die Patenterteilung:
**22.10.2008  Patentblatt 2008/43**

(21) Anmeldenummer: 05010335.7

(22) Anmeldetag: **12.05.2005**

(51) Int Cl.:
*H01S 3/00* (2006.01)  *H01S 3/08* (2006.01)
*H01S 3/06* (2006.01)  *H01S 3/067* (2006.01)
*H01S 5/00* (2006.01)  *H01S 5/20* (2006.01)
*H01L 21/20* (2006.01)  *B23K 26/073* (2006.01)
*G02B 27/09* (2006.01)  *C30B 13/24* (2006.01)

(54) **Verwendung eines Scheibenlasers zur Kristallisation von Siliziumschichten**

Use of a disc laser for the crystallization of silicon layers

Utilisation d'un laser à disque pour la cristallisation des couches de silicium

(84) Benannte Vertragsstaaten:
**DE FR GB**

(43) Veröffentlichungstag der Anmeldung:
**15.11.2006  Patentblatt 2006/46**

(73) Patentinhaber: **Innovavent GmbH**
**37085 Göttingen (DE)**

(72) Erfinder:
 • **Burghardt, Berthold, Dr. Dipl.-Phys.**
  **37161 Waake (DE)**
 • **Brunwinkel, Klaus**
  **37083 Göttingen (DE)**
 • **Kahlert, Hans-Jürgen, Dr.**
  **37077 Göttingen (DE)**
 • **Schmidt, Henning, Dr.**
  **37083 Göttingen (DE)**
 • **Gabler, Thomas, Dr.**
  **99441 Kromsdorf (DE)**
 • **Heist, Peter, Dr.**
  **07743 Jena (DE)**
 • **Hollemann, Günter, Dr.**
  **07749 Jena (DE)**
 • **Krause, Ulf, Dr.**
  **07751 Jena (DE)**

(74) Vertreter: **von Hellfeld, Axel**
 **Wuesthoff & Wuesthoff**
 **Patent- und Rechtsanwälte**
 **Schweigerstrasse 2**
 **81541 München (DE)**

(56) Entgegenhaltungen:
**EP-A- 1 063 049       WO-A-02/47219**
**DE-A1- 10 004 999     US-A- 2004 074 881**
**US-A1- 2001 005 606    US-A1- 2003 142 705**
**US-A1- 2005 079 645    US-B1- 6 259 711**

 • **HUEGEL H ET AL: "SOLID STATE THIN DISC LASER" PROCEEDINGS OF THE SPIE, SPIE, BELLINGHAM, VA, US, Bd. 3574, 31. August 1998 (1998-08-31), Seiten 15-28, XP001156738 ISSN: 0277-786X**
 • **NAYAK B.K.; MCLESKEY J.; SELVAN A.; EATON B.; GUPTA M.C.; ROMERO R.; GANGULY G.: 'Semiconductor laser crystallization of a-Si:H' PROCEEDINGS OF SPIE - THE INTERNATIONAL SOCIETY FOR OPTICAL ENGINEERING Bd. 4977, 2003, USA, Seiten 377 - 380**
 • **LI C.; MACKENZIE J.I.; WANG J.; SHEPHERD D.P.: 'A diode-bar side-pumped waveguide laser with an extended stable cavity for spatial mode control' OPTICS COMMUNICATIONS Bd. 226, 15 Oktober 2003, AMSTERDAM, NL, Seiten 317 - 321**
 • **KEMING DU ET AL: "PARTIALLY END-PUMPED ND:YAG SLAB LASER WITH A HYBRID RESONATOR" OPTICS LETTERS, OSA, OPTICAL SOCIETY OF AMERICA, Bd. 23, Nr. 5, 1. März 1998 (1998-03-01), Seiten 370-372, WASHINGTON, DC, US**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft die Verwendung eines Scheibenlasers zur Kristallisation von Siliziumschichten.

Eine Vielzahl von industriellen Oberflächenveränderungen mit Lasern erfordern das Aufheizen oder Schmelzen der Oberfläche. Ein Beispiel für eine solche Materialbearbeitung ist das Kristallisieren von dünnen Siliziumschichten für die Herstellung von Flachbildschirmen oder Solarzellen. Dabei handelt es sich um Schichten mit einer Stärke von typischerweise 50-500 nm. Diese Schichten werden durch Abscheiden von Silizium aus der Gasphase hergestellt. Bei dieser Abscheidung bildet sich in der dünnen Schicht noch keine regelmäßige Gitterstruktur aus, die Schicht besteht also nicht als kristallinem Silizium, vielmehr sind die Siliziumatome unregelmäßig angeordnet. Solche Schichten werden als "amorph" bezeichnet. Amorphe Siliziumschichten haben eine schlechte elektrische Leitfähigkeit. Mit Laserbestrahlung lassen sich solche dünnen Siliziumschichten kristallisieren und so erzeugte kristalline Siliziumschichten haben eine wesentlich höhere elektrische Leitfähigkeit.

Ein anderes Beispiel einer Verwendung von Lasern für die Materialbearbeitung, also insbesondere die Bearbeitung von oberflächennahen Schichten, ist die Kristallisation von dünnen dotierten oberflächennahen Schichten eines Siliziumwafers. Die für die Dotierung verwendeten Fremdatome können durch unterschiedliche Verfahren in das Silizium eingebracht werden. Ein oft verwendetes Verfahren ist das Implantieren von Ionen, die in einem elektrischen Feld beschleunigt und auf die Oberfläche des Siliziumwafers geschossen werden. Eine andere Methode der Einbringung der Fremdatome ist das Aufschmelzen der Oberfläche des Siliziumwafers in einer mit den Fremdatomen angereicherten Atmosphäre, sodass die Fremdatome in das geschmolzene Silizium eindringen können. Bei diesem Dotierungsprozess wird die Oberfläche des Siliziumwafers in der Regel amorph (ungeordnet). Solche dotierten Schichten sind für die Funktion von Transistoren wichtig. Allerdings muss das Silizium dabei kristallin vorliegen und die Fremdatome müssen auf den Gitterplätzen des kristallinen Siliziums angeordnet sein. Dabei ist eine genaue Kontrolle der Konzentration der Fremdatome, vor allem in Abhängigkeit von der Tiefe im Material, sehr wichtig. Auch bei diesem Verfahren kann mit Hilfe von Laserstrahlung die Kristallisation der mit Fremdatomen dotierten Oberflächenschichten durchgeführt werden. Das Silizium steht hier nur beispielhaft für verschiedene Materialien, die in der Elektronikindustrie und in anderen Bereichen eingesetzt werden.

Die vorstehend genannten Materialbearbeitungsverfahren sind im Stand der Technik bekannt. Dabei können sowohl kontinuierliche (cw) oder gepulste Laser eingesetzt werden. Die Laserstrahlung wird über die Oberfläche bewegt. Für diese Materialbearbeitung wird die Laserstrahlung oft in eine lange und sehr schmale Linie geformt. Diese Linie hat vorzugsweise eine gleichmäßige Intensitätsverteilung in der langen Abmessung (eine Intensitätsverteilung gemäß dem sogenannten "Top-Hat"), während die Intensitätsverteilung in der kurzen Abmessung, also quer zur Linie, in der Regel einen glockenförmigen Verlauf hat, zum Beispiel ein Gauß-Profil. Bei den Prozessen zur Oberflächenbearbeitung, also insbesondere den eingangs genannten Kristallisationsverfahren, spielt die Intensität der Laserstrahlung eine entscheidende Rolle. Bei kontinuierlichen Lasern ist dies die Leistung pro Fläche, also die Leistungsdichte. Bei gepulsten Lasern ist dies die Energie pro Fläche, also die Energiedichte. In der Regel werden möglichst hohe Intensitäten verlangt und deshalb ist es wünschenswert, die Breite der Linie, also die Abmessung senkrecht zur Längserstreckung der Linie, so gering wie möglich zu halten. Häufig wird eine Breite der Linie von 10 bis 50 $\mu$m gefordert und auch noch geringere Breiten.

Die Veröffentlichung NAYAK B K; MCLESKEY J; SELVAN A; EATON B; GUPTA M C; ROMERO R; GANGULY G: "Semiconductor laser crystallization of a-Si:H" PROCEE-DINGS OF SPIE - THE INTERNATIONAL SOCIETY FOR OPTICAL ENGINEERING, Bd. 4977, 2003, Seiten 377-380, USA, zeigt die Verwendung einer Laserdiode, deren Resonator ein anamorphotisches Element aufweist und deren Strahlung in eine lange und schmale Strahlungslinie fokussiert wird. Die Laserdiode wird zu Kristallisation von Siliziumschichten eingesetzt. Die US 2004/074881 A zeigt einen Slab-Laser mit rechteckförmigem Strahl und einer langen und breiten Strahlungslinie.

Der Erfindung liegt die Aufgabe zugrunde, für Materialbearbeitungen der eingangs genannten Art Strahlung mit möglichst homogenen und hoch einstellbaren Intensitäten bereitzustellen.

Erfindungsgemäß wird hierfür ein Scheibenlaser mit den im Anspruch 1 angegebenen Merkmalen verwendet.

Bevorzugte Ausgestaltungen der Erfindung sind in den abhängigen Ansprüchen beschrieben.

Der bei dem erfindungsgemäßen Verfahren verwendete Laserstrahl lässt sich zu einer extrem schmalen Linie fokussieren und behält dabei eine extrem hohe Intensität. Dies ergibt sich aus folgenden Erwägungen:

Um einen Laserstrahl zu fokussieren, ist es hilfreich, wenn der Laser auf nur wenigen räumlichen Moden anschwingt. Optimal ist es, wenn der Laser nur auf einer einzigen Mode schwingt ($TEM_{00}$-Mode oder auch Grundmode). Aber auch ein Laser, der auf mehreren Moden anschwingt, ermöglicht die genannte Fokussierung, solange es nur wenige Moden sind. Die Größe des Fokusdurchmessers ist nämlich gegeben durch die Gleichung

$$d = 4\,f\,\lambda\,M^2 / \pi\,D$$

Dabei bedeuten:

d:     erreichbarer Fokusdurchmesser, gemessen an den Punkten, an denen die Intensität vom Maximum auf $1/e^2$ (ca. 13,5 %) abgefallen ist,

f:     Brennweite der fokussierenden Linse,

$\lambda$:     Wellenlänge des Lasers,

$M^2$:     Maß für die Zahl der Moden. Ein Grundmodenlaser hat $M^2 = 1$, ein Mehrmodenlaser hat $M^2 = 2$ .... 50,

$\pi$:     3,14 ... ,

D:     Durchmesser des auf die Fokussierlinse auftreffenden Strahls, gemessen an der Abmessung, an der die Intensität vom Maximum auf $1/e^2$ abgefallen ist.

Die obige Gleichung zeigt, dass die Zahl der räumlichen Moden, die durch den Wert $M^2$ repräsentiert ist, einen großen Einfluss auf den erreichbaren Fokusdurchmesser hat. Zum Beispiel kann mit einem Laser, der bei der Wellenlänge 532 nm emittiert (zum Beispiel ein frequenzverdoppelter Nd:YAG-Laser) und dessen Strahl einen Durchmesser D von 5 mm hat, ein Fokusdurchmesser von etwa 68 $\mu$m erreicht werden, wenn der Laser eine Modenzahl $M^2 = 10$ aufweist und die Fokussierlinse eine Brennweite von 50 mm hat. Eine solche Breite ist größer als der üblicherweise geforderte Wert von 10-50 $\mu$m.

Theoretisch ließe sich der Fokusdurchmesser verringern, indem die Brennweite der Linse verringert wird (f wird kleiner) oder der Strahl vor der Linse aufgeweitet wird (D wird größer). In der Praxis sind dem jedoch Grenzen gesetzt. Kleinere Brennweiten als 50 mm sind nicht praktikabel, da dann die fokussierende Linse zu dicht an dem zu bearbeitenden Werkstück sitzt und durch Partikel oder Dämpfe, die bei der Laserbearbeitung entstehen, schnell verschmutzen könnte. Der Strahldurchmesser D lässt sich in der Regel auch nicht wesentlich vergrößern, da sonst die fokussierende Unse starke sphärische Abberationen aufweist (also Fokussierfehler) oder man einen sehr komplexes Linsensystem mit hoher numerischer Apertur (also große Eintrittsöffnungen) verwenden muss, was den apparativen Aufwand erhöht. Außerdem verringert sich die Tiefenschärfe bei einer hohen numerischen Apertur, was zusätzliche technische Probleme mit sich bringt.

Verwendet man aber bei einem Laser eine Modenzahl $M^2$ von zum Beispiel nur 3 bis 5, dann ließe sich beim obigen Beispiel eine Fokusgröße von 20 bis 34 $\mu$m erreichen.

Laser mit einem solchen $M^2$ (nachfolgend Modenzahl genannt) sind im Stand der Technik bekannt. Allerdings ist bei solchen Lasern die Ausgangsleistung begrenzt, zum Beispiel bei einem frequenzverdoppelten Nd:YAG oder Nd:YVO4-Laser auf etwa 20 W. Der Verwendung eines solchen Lasers für die oben genannten Anwendungen steht jedoch die Forderung entgegen, dass in der anderen Abmessung der Linie, also ihrer langen Abmessung, eine möglichst gleichmäßige und hohe Intensität vorliegt. Ein Laserstrahl hat oft eine glocken- oder Gaußförmige Intensitätsverteilung. Es gibt auch Laser, die auf vielen Moden schwingen (Multimode Laser) und die eine Intensitätsverteilung mit einem mehr oder weniger flachen Maximum aufweisen. Aber auch dieses Maximum ist noch zu ungleichmäßig hinsichtlich der räumlichen Intensitätsverteilung für die oben genannten typischen Anwendungen.

Deshalb werden im Stand der Technik sogenannte Strahlhomogenisierer eingesetzt, um eine gleichmäßige Intensitätsverteilung des Laserstrahls zu erreichen. Strahlhomogenisierer beruhen in der Regel auf dem Prinzip, dass der eintretende Laserstrahl in viele Teilstrahlen (zum Beispiel 3 bis 20 Teilstrahlen) aufgeteilt wird und diese Teilstrahlen räumlich überlagert werden. Dabei tritt der Effekt auf, dass die Teilstrahlen miteinander interferieren, d.h. sie Wechselwirken in der Weise miteinander, dass es zu räumlich unterschiedlichen Intensitätserhöhungen und -verminderungen kommt. Diese Interferenz führt zu einer sehr ungleichmäßigen Intensitätsverteilung, also genau nicht zu dem gewünschten Effekt. Dabei sind die durch Interferenz erzeugten Intensitätsschwankungen abhängig von der Kohärenz der Laserstrahlung und diese ist wiederum abhängig von der Anzahl der Moden, auf denen der Laser schwingt. Generell gilt, dass die Kohärenz umso kleiner ist (und damit auch die Stärke der Intensitätsschwankung), je mehr Moden im Laser schwingen, je größer also das $M^2$ ist.

Die oben genannte erfindungsgemäße Lösung des Problems, also die Verwendung eines Lasers, der in verschiedenen Richtungen unterschiedliche Modenzahlen $M^2$ aufweist, für die Materialbearbeitung, ermöglicht insbesondere auch ohne Strahlhomogenisierer eine weitestgehend homogene Intensitätsverteilung in der langen Abmessung der Strahlungslinie wenn hierfür ein Laser mit einem möglichst großen $M^2$ eingesetzt wird, während gleichzeitig zur Erzeugung einer möglichst geringen Breite der Strahlungslinie der Laser in bezug auf diese Richtung ein möglichst kleines $M^2$ aufweist. Die Erfindung lehrt also, wie eine Strahlungslinie erreicht werden kann, die in Querrichtung extrem stark fokussiert ist und somit eine hohe Intensität aufweist, während die Strahlungslinie in Richtung ihrer Längserstreckung eine möglichst homogene aber gleichwohl hohe Intensitätsverteilung hat. Dies wird erreicht, indem für die beiden genannten Richtungen jeweils im oder mit dem Laser unterschiedliche Modenzahlen eingestellt werden, also ein anamorphotischer Laser verwendet wird.

Der erfindungsgemäße Laser hat in einer ersten Richtung eine Modenzahl $M^2$ von 7 oder größer, während er in einer zweiten Richtung eine Modenzahl $M^2$ von 5 oder kleiner aufweist. Typischerweise stehend die beiden genannten Richtungen senkrecht zueinander. In der Fachsprache werden sie häufig als die "horizontale" und "vertikale" Achse eines Strahl bezeichnet.

Ein solcher Laser, mit dem eine Linie der eingangs beschriebenen Art mit gleichmäßiger Intensitätsverteilung in der einen und einer möglichst geringen Abmessung in der anderen Richtung erzeugbar ist, besitzt einen anamorphotischen Resonator und kann zum Beispiel ein anamorphotisches aktives Medium besitzen. Ein anamorphotischer Laserresonator hat zumindest ein anamorphotisches optisches Element. Das kann zum Beispiel eine Zylinderlinse sein, oder ein Prisma, oder eine Spaltblende. Es können auch andere anamorphotische Komponenten eingesetzt werden oder mehrere gleiche oder unterschiedliche Komponenten zu diesem Zweck. Auch kann das aktive Lasermedium selbst unterschiedliche räumliche Eigenschaften in den beiden Achsen senkrecht zur Strahlungsausbreitungsrichtung aufweisen. Gemeinsam ist den hier beschriebenen Lasersystemen, dass ein Laserstrahl erzeugt und verwendet wird, der in der einen Achse senkrecht zur Ausbreitungsrichtung des Strahl ein kleines $M^2$ von 5 oder kleiner aufweist, und in der anderen Achse senkrecht zur Ausbreitungsrichtung ein großes $M^2$ von 7 oder größer.

Ein anderes Beispiel für ein anamorphotisches laseraktives Medium, das nicht Bestandteil der vorliegenden Erfindung ist, wäre ein Laserkristall, wie ein Nd:YAG-Stab mit einem rechteckigen oder elliptischen Querschnitt. Die Strahlung eines solchen Lasers kann sehr effizient zur Durchführung von Oberflächenmodifikationen benutzt werden. Bei herkömmlichen Lasern muss hingegen ein großer Teil der Strahlungsleistung vernichtet (ausgeblendet) werden, um die gewünschte Strahleigenschaft zu erreichen. Die Erfindung ermöglicht somit einen hohen Nutzungsgrad der mit dem Laser erzeugten Lichtleistung.

Ein weiteres Beispiel, das nicht Bestandteil der vorliegenden Erfindung ist, wäre ein Excimerlaser, der zwar aufgrund der Geometrie seines Anregungsprofils typischerweise einen anamorphotischen Strahl emittiert, jedoch ist der Betrieb von Excimerlasern mit der Handhabung giftiger Gase verbunden und seine UV-Strahlung führt zur Degradations- und Kontaminationsproblemen.

Deshalb wird die vorliegende Erfindung bevorzugt auch eingesetzt bei Lasern, die langwelliger als im UV-Bereich emittieren, nämlich im sichtbaren Bereich, insbesondere im grünen Bereich.

Der Stand der Technik kennt seit einigen Jahren diodengepumpte Festkörperlaser in SLAB-Anordnung. Bekannt sind hierfür mehrere Varianten, vgl. R.J. Shine Jr., A.J. Alfrey and R.L. Byer, "A 40 W cw, TEM00 mode, diode-laserpumped, Nd:YAG zig-zag miniature-slab laser", SPIE Proceedings Series Volume 2379, The International Society for Optical Engineering SPIE, 5-7 February 1995, San Jose, California, pp. 112-119, und Keming Du, Nianle Wu, Jiandong Xu, J. Giesekus, P. Loosen, R. Poprawe, "Partially end-pumped Nd:YAG slab laser with a hybrid resonator", Optics Letters 23, pp. 370-372 (1998).

Diese bekannten Laser werden durch die Wahl geeigneter Resonatoren mit Blick auf ein möglichst symmetrisches Strahlprofil optimiert. Beim vorstehend erstgenannten Literaturzitat durchläuft der Strahl einen zickzack-förmigen Pfad durch den SLAB-Kristall, sodass trotz eines anamorphotischen Verstärkungsquerschnittes letztlich ein runder Strahl entsteht, der überlappend den verstärkenden Bereich des Laserkristalls durchlaufen hat. Im vorstehend zuletzt genannten Literaturzitat wird eine SLAB-Laseranordnung beschrieben, die mittels eines instabil-stabilen Resonatoranordnung einen näherungsweise symmetrischen Laserstrahl geringer Modenordnung emittiert.

SLAB-Laseranordnungen gemäß dem Stand der Technik sind zwar geeignet zur Erzeugung anamorphotischer Laserstrahlung, jedoch weisen sie prinzipiell bedingte Nachteile auf, nämlich die Neigung zum Anschwingen parasitärerer Oszillationen aufgrund der hohen Verstärkung und die Neigung zu Strahllage- und Strahlrichtungsinstabilitäten. Weiterhin sind herkömmliche SLAB-Laser grundsätzlich sehr aufwendig hinsichtlich der Justierung.

Die Erfindung lehrt deshalb Verwendung eines bestimmten Lasers, der in zur Strahlausbreitungsrichtung orthogonalen Achsen unterschiedliche Modenzahlen $M^2$ aufweist, der sich bevorzugt für die beschriebenen Anwendungen eignet, nämlich einen:

Scheibenlaser mit einem anamorphotischen Resonator zur Erzeugung von Strahlung, die in ersten Richtung eine Modenzahl $M^2$ von 7 oder größer und in einer zweiten Richtung eine Modenzahl $M^2$ von 5 oder kleiner aufweisen.

Die Erfindung lehrt auch ein Scheibenlasersystem mit einem resonatorexternen Verstärker.

Nachfolgend werden Ausführungsbeispiele der Erfindung und ein anderes Beispiel anhand der Zeichnungen näher beschrieben. Es zeigt:

Figur 1 ein erstes Ausführungsbeispiel eines Lasersystems zur Erzeugung einer schmalen Strahlungslinie;

Figur 2 ein zweites Ausführungsbeispiel eines Lasersystems mit einem resonatorexternen Verstärker zur Erzeugung einer schmalen Strahlungslinie; und

Figur 3 eine Laserdiodenzeile zur Erzeugung einer Laserstrahlung mit unterschiedlichen Modenzahlen in verschiedenen Richtungen.

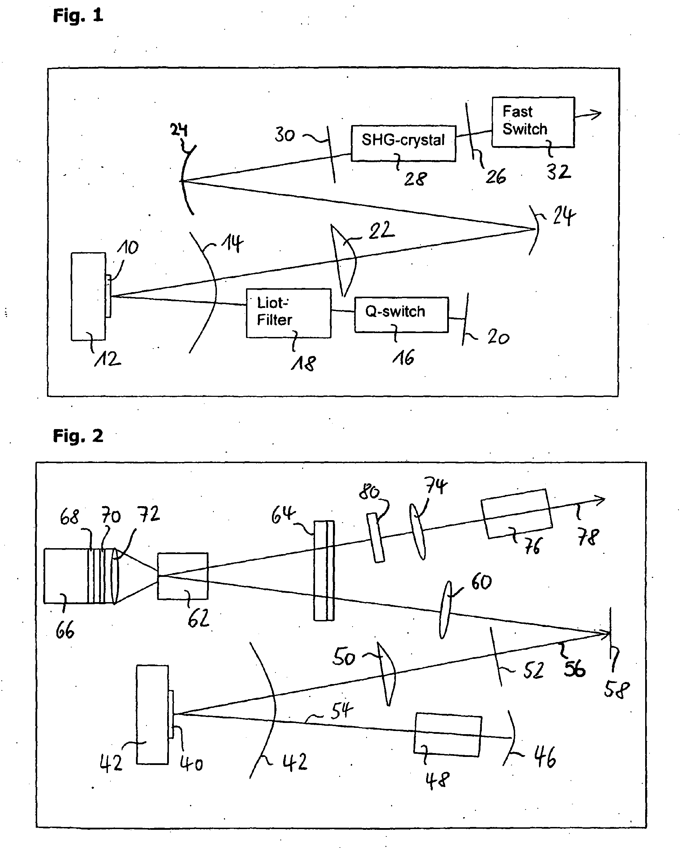

Beim Ausführungsbeispiel nach Figur 1 wird das Prinzip des Scheibenlasers eingesetzt. Dies ist zum Beispiel bekannt aus US-PS 5,553,088. Ein wesentlicher Vorteil solcher Scheibenlaseranordnungen liegt darin, dass durch die Auslegung des Laserkristalls als dünne Scheibe keine Probleme mit einer thermischen Linse entstehen.

Die bekannten Laserresonatoren unter Verwendung dieses Prinzips erzeugen in der Regel ein symmetrisches Strahlprofil. Durch die hohe Kohärenz der Strahlung ist ein solcher Laser wenig geeignet für die Strahlhomogenisierung.

Bei der Anordnung gemäß Figur 1 wird der Scheibenlaser mit einem anamorphotischen Resonator zur Erzeugung anamorphotischer Strahlung verknüpft. Im einzelnen:

> Gemäß Figur 1 ist eine Laserkristallscheibe 10 wärmeleitend mit einer Wärmesenke 12 aus zum Beispiel Kupfer oder Kufper-Wolfram verbunden. Ein Parabolspiegel 14 dient als sogenannte Pumpoptik für den Laser. Der Laserresonator wird durch einen Endspiegel 20 und einen Auskoppelspiegel 26 definiert. Im Resonator ist ein Güteschalter 16 angeordnet, zum Beispiel ein AOM oder eine Pockelszelle. Ein Liot-Filter (Doppelbrechungsfilter) 18 dient zur Einengung des longitudinalen Modenspektrums. Das Liot-Filter ist zum Beispiel aus kristallinem Quarz.

Ein optisches Element 22 dient zur Erzeugung eines astigmatischen Resonators und somit der Erzeugung von Laserstrahlung, die in verschiedenen, zu ihrer Ausbreitungsrichtung senkrechten Richtungen unterschiedliche Modenzahlen $M^2$ aufweist. Zum Beispiel kann es sich bei dem optischen Element 22 um eine Zylinderlinse handeln. Das Element 22 wird so angeordnet, dass sich in der x-Ebene, also der Zeichenebene, auch Tangentialebene genannt, eine $TEM_{00}$ Strahltaille und in der dazu senkrechten y-Ebene (der sogenannten Sagittalebene) eine mehrmodige Strahltaille ergibt. Zwei gekrümmte Spiegel 24 bilden ein resonatorinternes Teleskop.

Das vorstehend beschriebene Ausführungsbeispiel mit dem optischen Element 22 zur Erzeugung eines astigmatischen Resonators mit den genannten Eigenschaften kann dahingehend abgewandelt werden, dass anstelle des optischen Elements 22 auch einer der beiden Spiegel 24 eine nicht-sphärische Form hat, um die unterschiedlichen Modenzahlen in den verschiedenen Richtungen zu erhalten.

Die über den dichroitischen Spiegel 30 ausgekoppelte Laserstrahlung wird in einem Frequenzverdopplungskristall 28, z.B. LBO, frequenzverdoppelt. Über einen Auskoppelspiegel 26 wird die Strahlung in einen externen schnellen Schalter 32 für grüne Strahlung eingegeben, z.B. eine Pockelszelle oder ein AOM, und von dort für die eingangs beschriebenen Anwendungen eingesetzt.

In der vorstehend beschriebenen Anordnung wird der Scheibenlaser mit einem anamorphotischen Resonator zur Erzeugung der anamorphotischen Strahlung verknüpft. Dies geschieht durch die genannten Zylinderoptik, also zum Beispiel eine Zylinderlinse oder einen zylindrischen Spiegel, eine im Winkel angeordnete Parallelplatte, einen schrägen Einfall der Strahlung auf einen sphärisch gekrümmten Faltspiegel oder auf ein prismatisches Element. Dabei wird die Zweite Harmonische resonatorintern, also mit hoher Wandlungseffektivität erzeugt.

Dabei ist ein Vorteil des mit dem anamorphotischen Resonator verbundenen elliptischen Strahlquerschnittes im Resonator, dass die Leistungsdichte im nichtlinearen Verdopplerkristall herabgesetzt ist unter Beibehaltung der guten Strahlqualität in Richtung des kritischen Phaseanpassungswinkels. Dies ergibt gleichzeitig eine hohe Wandlungseffizienz bei hohen Leistungen, aber Leistungsdichten weit unterhalb den Zerrstörungsschwellen des Kristalls.

Das Ausführungsbeispiel eines Lasersystems gemäß Figur 2 unterscheidet sich vom Ausführungsbeispiel nach Figur 1 insbesondere dahingehend, dass der anamorphotische Strahl in einem Verstärker angepasster Geometrie nachverstärkt und resonatorextern erzeugt wird.

Eine Laserkristallscheibe 40, z.B. Nb:YVO4, mit einem Durchmesser von 5 bis 10 mm, einer Stärke von 0,2 bis 0,3 mm, und einer Dotierung von 0,5 bis 1%, ist auf einer Wärmesenke 42 wärmeleitend montiert und wird von einer Laserdiode (nicht gezeigt) gepumpt, beispielsweise einer fasergekoppelten Laserdiode. Der Pumpfleckdurchmesser in der Scheibe 40 beträgt 1,6 mm = 2 wp. Ein Parabolspiegel 42 dient als Pumpoptik. Der Resonator weist einen Endspiegel 46 auf, der konkav gekrümmt ist. Im Resonator ist, wie beim Ausführungsbeispiel nach Figur 1, ein Güteschalter 48 angeordnet, z.B. AOM oder eine Pockelszelle, z.B. RTP oder BBO.

Ein optisches Element 50 dient, wie beim Ausführungsbeispiel nach Figur 1, zur Erzeugung eines astigmatischen Resonators. Beim optischen Element kann es sich zum Beispiel um eine Zylinderlinse handeln. Das Element wird so angeordnet, dass sich in der x-Ebene (also der Zeichenebene, auch Tangentialebene genannt) eine $TEM_{00}$-Strahltaille ergibt mit z.B. 2wl (Laser, Scheibe) = 2wpump/15 und in der y-Ebene (senkrecht dazu, Sagittallebene) wl (Laser, Scheibe) = 2w (pump)/ 5. Der Laser imitiert dadurch mit einer Beugungsmaßzahl $Mx^2/My^2$ = 15/5.

Ein Auskoppelspiegel 52 definiert mit dem Endspiegel 46 den Resonator. Zum Beispiel kann der Auskoppelspiegel 52 plan sein mit einer Reflektivität R = 90%. Die Resonatorstrahlung ist also mit dem Bezugszeichen 54 gekennzeichnet. Der ausgekoppelte IR-Strahl 56 hat zum Beispiel eine Leistung von 20W bei 1064 nm, eine Repetitionsrate im Bereich von 50 - 100 kHz, eine Pulsdauer von 20 - 300 ns, und ist horizontal polarisiert mit $M^2$ = 5 (Sagittallebene) x 15 (Tangentialebene). Über einen Umlenkspiegel 58 wird der ausgekoppelte Strahl in eine Modenanpassungslinse 60 geschickt zur Einkoppelung des Oszillatorstrahls in einen oder mehrere (z.B. 6) Verstärkerkristalle 62, die zickzack-förmig seriell angeordnet sind (vgl. US-PS 6,661,568), z.B. Nd:YVO4-Mikro-Slab-Kristall, z.B. 1 mm hoch, 4 m breit, 6 mm lang, 0,5 bis 1% dotiert, wobei der Strahl auf 60 - 150 W verstärkt ist.

64 ist eine Zylinderlinse zur Modenanpassung des Laserstrahls mit dem elliptischen Pumpstrahl.

Eine Diodenlaserzeile (array) 68 sitzt an einer Wärmesenke 66. Einer sogenannten Fast Axis Collimation ist einer Fokussierlinse 72 für die Pumpstrahlung vorgeschaltet. Die Fokussierlinse 72 erzeugt einen elliptischen Pumpfokus im Verstärkerkristall (siehe unten), beispielsweise 2 mm x 200 $\mu$m. Eine sogenannte $\lambda$-Halbe-Platte 80 für Strahlung mit 1064 nm Wellenlänge dient der Einstellung einer geeigneten Polarisation für die Erzeugung der Zweiten Harmonischen. Eine Fokussieroptik 74 fokussiert auf den resonatorextern angeordneten optisch nichtlinearen Kristall 76. Der Kristall 76 für die Erzeugung der Zweiten Harmonischen ist zum Beispiel aus LBO und zum Beispiel mit kritischer Winkel-Phasenanpassung angeordnet, insbesondere bei einem elliptischen Strahlprofil, wobei die Kristallachsen so angeordnet sind, dass die schlechte Strahlqualität nicht in der Ebene des kritischen Phasenanpassungswinkels liegt. Der Kristall hat zum Beispiel Abmessungen von 3 x 5 x 25 mm$^3$.

Der frequenzverdoppelte Ausgangsstrahl 78 liegt dann im grünen Spektralbereich und hat zum Beispiel folgende Daten: 60W, 300 ns, 100 kHz, M$^2$ = 5 x 15.

Die Einstellung der gewünschten Modenzahlwerte M$^2$ in der x- und der y-Ebene wird dabei so realisiert, dass der Laserstrahldurchmesser um einen entsprechenden Faktor kleiner gewählt wird als der Pumpfokusdurchmesser. Dadurch werden die gewünschten Modenordnungen des Lasers angeregt. Bei einem Pumpfokusdurchmesser von 5 mm und einem gewünschten M$^2$ von 5 x 15 muss der TEM$_{00}$-Laserstrahldurchmesser am Ort der Laserscheibe also 1 mm x 0,33 mm betragen.

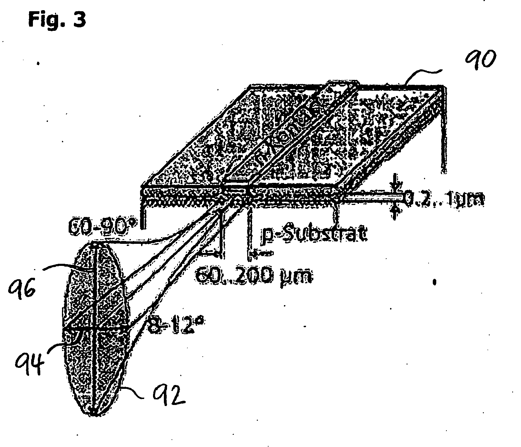

Figur 3 zeigt eine Laserdiodenzeile, die besonders geeignet ist, Strahlung zu erzeugen, die in verschiedenen Richtungen senkrecht zur Strahlungsrichtung unterschiedliche Modenzahlen M$^2$ aufweist. Kantenemitter-Laserdioden emittieren bekanntlich einen anamorphotischen Laserstrahl. Eine solche Strahlquelle eignet sich besonders für Anwendungen, bei denen ein Dauerstrichmodus erforderlich ist.

Die in Figur 3 gezeigte Laserdiodenzeile ist mit typischen Strahlmessungen und Divergenzen hinsichtlich der beiden Achsen 94, 96 des emittierten Strahls 92 dargestellt. Solche Diodenlaser haben in der einen Achse (sogenannte Fast Axis, hier vertikal) eine Strahlung mit einem sehr kleinen Strahlparameterprodukt (Strahlabmessung x Divergenz), emittieren aber in bezug auf die andere Achse (sogenannte Slow Axis) Strahlung mit einem sehr großen Strahlparameterprodukt. Dabei sind die Modenzahl und das Strahlparameterprodukt miteinander verknüpft. Wächst der eine Parameter, so wächst auch der andere, und umgekehrt. Beim dargestellten Beispiel hat die Strahlung in der Fast Axis (vertikal) ein Strahlparameterprodukt von z.B. 0,2 $\mu$m x 60° = 0,21 $\mu$m x rad und in der Slow Axis (horizontal) von z.B. 60 $\mu$m x

12° = 12,6 $\mu$m x rad.

Bei einem solchen Laser ist die Anforderung nach unterschiedlichen Modenzahlen M$^2$ in beiden Achsen senkrecht zur Ausbreitungsrichtung des Laserstrahls gut erfüllt.

**Patentansprüche**

1. Verwendung eines Scheibenlasers, dessen Resonator zumindest ein anamorphotisches optisches Element aufweist und dessen Strahlung in eine lange und schmale Strahlungslinie fokussiert wird und dessen Strahlung in Richtung der Längserstreckung der Strahlungslinie eine Modenzahl M$^2$ von 7 oder größer und in Richtung der Breite der Strahlungslinie eine Modenzahl M$^2$ von 5 oder kleiner aufweist, zur Kristallisation von Siliziumschichten.

2. Verwendung eines Scheibenlasers nach Anspruch 1, wobei der Laser ein anamorphotisches aktives Lasermedium aufweist.

3. Verwendung eines Scheibenlasers nach einem der vorhergehenden Ansprüche, wobei der Laser einen anamorphotischen Resonator zur Erzeugung anamorphotischer Strahlung aufweist.

4. Verwendung eines Scheibenlasers nach einem der vorhergehenden Ansprüche, wobei der Laser eine resonatorinterne Zylinderoptik aufweist.

5. Verwendung eines Scheibenlasers nach einem der vorhergehenden Ansprüche mit einer resonatorintem erzeugten zweiten Harmonischen.

6. Verwendung eines Scheibenlasers nach einem der Ansprüche 1 bis 4 mit einem resonatorexternen Verstärker.

7. Verwendung eines Scheibenlasers nach einem der vorhergehenden Ansprüche mit Strahlung im sichtbaren Bereich des elektromagnetischen Spektrums.

8. Verwendung eines Scheibenlasers nach Anspruch 7 mit Strahlung im grünen Bereich des Spektrums.

**Claims**

1. Use, for crystallization of silicon layers, of a slab laser the resonator of which comprises at least an anamorphotic optical element and the radiation of which is focused into a long and narrow radiation line and the radiation of which comprises in longitudinal direction of the radiation line a mode number M$^2$ of 7 or larger and in the direction of the width of the radiation line a mode number M$^2$ of 5 or smaller.

**2.** Use of a slab laser according to claim 1, wherein the laser comprises an anamorphtic active laser medium.

**3.** Use of a slab laser according to one of the preceding claims, wherein the laser comprises an anamorphotic resonator for generating anamorphotic radiation.

**4.** Use of a slab laser according to one of the preceding claims, wherein the laser comprises a cylindrical optic within the resonator.

**5.** Use of a slab laser according to one of the preceding claims comprising intracavity generation of a second harmonic.

**6.** Use of a slab laser according to one of the claims 1 to 4 comprising an extracavity amplifier.

**7.** Use of a slab laser according to one of the preceding claims emitting radiation in the visible range of the electro-magnetic spectrum.

**8.** Use of a slab laser according to claim 7, with radiation in the green range of the spectrum.

**Revendications**

**1.** Utilisation d'un laser à disque, dont le résonateur présente au moins un élément optique anamorphosique et dont le rayonnement est concentré dans une ligne de rayonnement longue et étroite et dont le rayonnement en direction de l'extension longitudinale de la ligne de rayonnement présente un indice de mode $M^2$ de 7 ou plus et en direction de la largeur de la ligne de rayonnement un indice de mode $M^2$ de 5 ou moins, pour la cristallisation de couches de silicium.

**2.** Utilisation d'un laser à disque selon la revendication 1, le laser présentant un support à laser actif anamorphosique.

**3.** Utilisation d'un laser à disque selon l'une quelconque des revendications précédentes, le laser présentant un résonateur anamorphosique pour générer du rayonnement anamorphosique.

**4.** Utilisation d'un laser à disque selon l'une quelconque des revendications précédentes, le laser présentant une optique cylindrique interne au résonateur.

**5.** Utilisation d'un laser à disque selon l'une quelconque des revendications précédentes avec une seconde harmonique générée de façon interne au résonateur.

**6.** Utilisation d'un laser à disque selon l'une quelconque des revendications 1 à 4 avec un amplificateur externe au résonateur.

**7.** Utilisation d'un laser à disque selon l'une quelconque des revendications précédentes avec du rayonnement dans la zone visible du spectre électromagnétique.

**8.** Utilisation d'un laser à disque selon la revendication 7 avec du rayonnement dans la zone verte du spectre.

**Fig. 1**

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2004074881 A
- US 5553088 A
- US 6661568 B

**In der Beschreibung aufgeführte Nicht-Patentliteratur**

- **NAYAK B K ; MCLESKEY J ; SELVAN A ; EATON B ; GUPTA M C ; ROMERO R ; GANGULY G.** Semiconductor laser crystallization of a-Si:H. *PROCEEDINGS OF SPIE - THE INTERNATIONAL SOCIETY FOR OPTICAL ENGINEERING,* 2003, vol. 4977, 377-380
- **R.J. SHINE JR. ; A.J. ALFREY ; R.L. BYER.** A 40 W cw, TEM00 mode, diode-laserpumped, Nd:YAG zig-zag miniature-slab laser'', SPIE Proceedings Series. *The International Society for Optical Engineering SPIE,* 05. Februar 1995, vol. 2379, 112-119
- **KEMING DU ; NIANLE WU ; JIANDONG XU ; J. GIESEKUS ; P. LOOSEN ; R. POPRAWE.** Partially end-pumped Nd:YAG slab laser with a hybrid resonator. *Optics Letters,* 1998, vol. 23, 370-372